# EUROPÄISCHE PATENTSCHRIFT

(11) **EP 2 330 060 B1**
(45) Veröffentlichungstag und Bekanntmachung des Hinweises auf die Patenterteilung: **17.04.2013**
(21) Anmeldenummer: 10014562.2
(22) Anmeldetag: 12.11.2010
(51) Int. Cl.: B65G 1/137, B65G 61/00

(54) **Verfahren und Vorrichtung zur automatisierten Kommissionierung von Gebinden**
Method and device for automatically commissioning of products
Procédé et dispositif destinés au commissionnement automatisé de groupe de produits

(30) Priorität: 02.12.2009 DE 102009056639
(43) Veröffentlichungstag der Anmeldung: 08.06.2011
(73) Patentinhaber: KUKA Roboter GmbH, 86165 Augsburg (DE)
(72) Erfinder: Baumann, Michael, 85774 Unterföhring (DE)
(74) Vertreter: Schlotter, Alexander Carolus Paul

(56) Entgegenhaltungen:
- AT-U1- 898
- DE-A1- 2 062 845
- US-A1- 2007 280 814
- US-A1- 2008 267 759

## Beschreibung

Die vorliegende Erfindung betrifft ein Verfahren und eine Vorrichtung zur automatisierten Kommissionierung von Gebinden, insbesondere zum gemischten Palettieren von Zielpaletten aus unterschiedlichen sortenreinen Quellpaletten.

In einer Vielzahl von Bereichen, beispielsweise der Herstellung von bzw. dem Groß-, Zwischen- oder Versandhandel mit Nahrungsmitteln, insbesondere Getränken, Molkereiprodukten, Genussmitteln, Ersatz- und Zubehörteilen sowie Industrie-, Convenience- und Haushaltsprodukten liegen Waren in sortenreinen Quellpaletten mit gleichartigen Gebinden vor, beispielsweise Getränkekisten oder Joghurtsteigen gleicher Geschmacksrichtung. Hieraus werden gemischte Zielpaletten zusammengestellt, die je nach Auftrag diverse unterschiedliche Gebinde enthalten, die sich in Sorte, Größe oder dergleichen unterscheiden.

Üblicherweise wird dabei eine sortenreine Quellpalette zunächst komplett vereinzelt und ihre Gebinde in eigenen Puffern magaziniert. Nachteilig müssen hierzu sehr große Puffer vorgesehen werden, um alle Gebinde einer sortenreinen Quellpalette aufnehmen zu können. Da zur gemischten Palettierung für jede Gebindesorte wenigstens ein Puffer bereitgestellt werden muss, sind solche Anlagen nicht nur unflexibel, sondern weisen auch einen großen Platzbedarf auf.

Die DE 10 2006 057 758 A1 schlägt vor, autarke Transportfahrzeuge aus sortenreinen Gebindelagen, die in Hochregalen vorliegen, zu bestücken und aus den Transportfahrzeugen die Zielpaletten zu erstellen.

Aus der DE 10 2008 020 622 A1 sind ein Verfahren und eine Vorrichtung zur Umsortierung von Stückgutzusammenstellungen bekannt. Dabei werden Gebindezusammenstellungen von verschiedenen Bestückungseinrichtungen durch eine Überführungseinheit aufgelöst und auf zugeordnete Förderbänder verteilt, die als Gebindepuffer dienen, aus denen Zielpaletten palettiert werden. Nachteilig ergibt sich auch hier ein großer Platzbedarf und eine geringe Anlagenflexibilität.

Die US 2008/0267759 A1 offenbart ein System zur Kommissionierung von gemischten Paletten. Das System besteht aus einem Paletteneingangssystem, das Paletten mit verschiedenen Gebinden auf zwei Schienen bereitstellt. Ein Roboter auf einer Gleitschiene bewegt sich zwischen den beiden Schienen auf denen die Quellpaletten bereitgestellt werden. Der Roboter ist mit einem Greifer ausgestattet, um eine gemischte Palette zusammenzustellen.

Die DE 20 62 845 A1 offenbart eine Kommissioniereinrichtung für Artikel, die auf Paletten gespeichert sind. Zur Kommissionierung von Versandpaletten werden Vorratspaletten mit mehreren homogenen Lagen auf der Palettentransportbahn bis zur Kommissionierbahn befördert und dort eine entsprechende Lage der Palette durch einen Hebegreifer abgenommen und auf einer Versandpalette abgesetzt.

Die AT 898 U1 offenbart ein Verfahren und eine Einrichtung zur schonenden Kommissionierung von artikelrein zusammengestellten Verteileinheiten, die auf einer Großeinheit zusammengestellt sind. Durch eine fahrbare Kommissionseinrichtung werden Waren transportiert.

Die US 2007/0280814 A1 offenbart ein Verfahren und eine Vorrichtung zur Kommissionierung von Gebinden gemäß den Oberbegriffen der Ansprüche 1 und 7. In diesem Dokument werden Artikellagen von den Quellpaletten zu einem Magazin transportiert. Danach werden gemischten Paletten aufgebaut. In diesem System ist ein großes Magazin nötig.

Aufgabe der vorliegenden Erfindung ist es, die automatisierte Kommissionierung von Gebinden zu verbessern und wenigstens einen der vorgenannten Nachteile zu beseitigen oder zu verringern.

Diese Aufgabe wird durch ein Verfahren mit den Merkmalen des Anspruchs 1 gelöst. Anspruch 7 stellt eine Vorrichtung zur Durchführung eines Verfahrens nach Anspruch 1 unter Schutz. Die Unteransprüche betreffen vorteilhafte Weiterbildungen.

Erfindungsgemäß werden zur automatisierten Kommissionierung von Gebinden unterschiedliche, vorzugsweise sortenreinen, Quellpaletten bereitgestellt und nacheinander und/oder parallel eine oder mehrere Zielpalette palettiert.

Ein Gebinde im Sinne der vorliegenden Erfindung kann insbesondere ein verpacktes oder unverpacktes Stückgut oder eine Warenzusammenstellung wie beispielsweise eine Kiste, ein Karton oder eine Steige mit Schütt- oder mehreren Einzelgütern wie Getränkeflaschen, Molkereiproduktbehältern oder dergleichen sein. Als Gebindelage wird insbesondere eine Gruppe von horizontal neben- und/oder hintereinander angeordneten Gebinden bezeichnet. Eine Palette bezeichnet dementsprechend eine Anzahl von vertikal aufeinandergestapelten Gebindelagen, vorzugsweise einschließlich eines Trägers zur Handhabung wie beispielsweise einer sogenannten Transportpalette wie den Industrie- oder den Europaletten EUR, EUR 2, EUR 3 und dergleichen. Zur einheitlichen Darstellung wird ein leerer Träger entsprechend als Leerpalette, i.e. mit Anzahl Null vertikal aufeinandergestapelter Gebindelagen, bezeichnet. Eine sortenreine (Gebinde)Lage bzw. Palette enthält nur Gebinde derselben Sorte bzw. Art, beispielsweise nur identische Waren. Eine Palette mit unterschiedlichen, jeweils sortenreinen Lagen wird als lageweise sortenreine oder Regenbogenpalette ("Rainbow Pallet") bezeichnet. Vertikal aufeinandergeschichtete Gebinde werden als Stapel bzw. gestapelt bezeichnet. Unter einer Gebindegruppe wird eine Mehrzahl gemeinsam gehandhabter neben- und/oder hintereinander angeordneter Gebinde verstanden, wobei nachfolgend anstelle eines einzelnen Gebindes auch stets eine solche Gebindegruppe gedacht werden kann, während zur kompakteren Darstellung meist von einem Gebinde gesprochen wird.

Gemäß einem ersten Aspekt der vorliegenden Erfindung werden wechselnd und/oder variabel vorgegeben Gebindelagen von unterschiedlichen Quellpaletten vereinzelt und magaziniert, bevor eine, vorzugsweise gemischte, Zielpalette mit diesen Gebinden palettiert wird.

Unter einer Vereinzelung wird dabei vorliegend insbesondere die Beabstandung und/oder Umorientierung von Gebinden bzw. Gebindegruppen einer Gebindelage oder -gruppe relativ zueinander verstanden. Dies geschieht in einer bevorzugten Ausführung durch ein ein- oder mehrstufiges Aufziehen von Gebindelagen bzw. - gruppen mittels Geschwindigkeits- und/oder Richtungsänderungen und/oder Weichen in Fördersystemen wie beispielsweise Mattenkettenförderern und/oder mittels entsprechender Greifer, wie sie zum Beispiel in der eigenen deutschen Patentanmeldung 10 2009 011 299 beschrieben sind. Als Magazinierung wird die Zwischenablage von Gebinden, die von einer Quellpalette vereinzelt wurden, bezeichnet, bevor sie auf eine Zielpalette palettiert werden, als Magazin entsprechend eine Lagervorrichtung zur Aufnahme dieser Gebinde. Eine Ablageflächen kann insofern bereits ein Magazin im Sinne der vorliegenden Erfindung darstellen. Bevorzugt lagert ein Magazin Gebinde jedoch form- und/oder kraftschlüssig, beispielsweise durch entsprechende seitliche Rahmen, Führungen oder Federn. Eine Entmagazinierung beschreibt entsprechend die Entnahme von Gebinden aus Magazinen.

Unter einer wechselnden Vereinzelung wird vorliegend insbesondere verstanden, dass nur ein Teil der Gebindelagen einer ersten Quellpalette, insbesondere eine erste Gebindelage von einer ersten Quellpalette, und anschließend eine oder mehrere Gebindelagen von einer zweiten Quellpalette vereinzelt werden, bevor weitere Gebindelagen der ersten oder einer dritten Quellpalette vereinzelt werden. Eine variabel vorgegebene Vereinzelung kann insbesondere automatisch in Abhängigkeit vom Füllungsgrad eines zugeordneten Magazins und/oder in Abhängigkeit vom Bedarf oder Palettierungsmuster für eine Zielpalette erfolgen.

Gegenüber dem Stand der Technik, nach dem üblicherweise jeweils alle Gebinde einer Quellpalette vollständig vereinzelt und auf entsprechende Magazine verteilt werden, bevor die nächste Quellpalette abgearbeitet wird, reduziert die wechselnde und/oder variabel vorgegebene Vereinzelung und Magazinierung die Anzahl der handzuhabenden Gebinde in der Anlage bzw. deren Komponenten wie zum beispiel Förderern und Magazinen. Insbesondere können Gebinde in ihrer nur teilweise vereinzelten Quellpalette verbleiben, solange ein oder mehrere entsprechende Magazine noch ausreichend gefüllt sind. Auf diese Weise kann auch flexibler auf kurzfristige Anforderungen reagiert werden. Insbesondere können kleinere und dementsprechend vorteilhaft auch mehr Magazine für mehr Gebindesorten vorgesehen werden.

Gemäß einem zweiten Aspekt der vorliegenden Erfindung, der bevorzugt mit dem vorstehend erläuterten ersten Aspekt kombiniert ist, werden Gebinde einzeln oder als Gebindegruppen gestapelt magaziniert und/oder entmagaziniert, bevor eine, vorzugsweise gemischte, Zielpalette mit diesen Gebinden palettiert wird. Dabei wird als gestapelte Magazinierung insbesondere eine Magazinierung in einen Stapel, i.e. das vertikale Aufeinanderschichten von Gebinden, und/oder die Handhabung als Stapel, i.e. mehrerer vertikal aufeinandergeschichteter Gebinde zusammen, beispielsweise mittels eines Säulegreifers, bezeichnet.

Im Gegensatz zu dem eingangs erläuterten Stand der Technik erlaubt dies nicht nur die Magazinierung auf kleinerem horizontalen Raum, sondern kann in einer bevorzugten Ausführung auch die Handhabungszeiten verringern, da ein Greifer, der mehrere gestapelte Gebinde gemeinsam handhabt, Verfahrwege spart.

Hierzu können beispielsweise Gebinde oder Gebindegruppen vor ihrer Magazinierung gestapelt und so gemeinsam und damit schneller einem Magazin zugeführt werden. Dabei können Gebinde zum Beispiel bereits vor Aufnahme durch einen Greifer durch eine Stapelstation aufeinandergestapelt und/oder durch Umsetzen des Greifers mit gegriffenen Gebinden auf weitere, insbesondere in einer Fördereinrichtung folgende Gebinde aufeinandergestapelt und anschließend in dem Magazin abgesetzt werden.

Zusätzlich oder alternativ können Gebinde in analoger Weise bei ihrer Entmagazinierung ein- oder mehrstufig gestapelt und so als Stapel bzw. Turm auf die Zielpalette palettiert werden. Beispielsweise kann ein Greifer in einer ersten Stapelstufe sukzessive mehrere Gebinde aus unterschiedlichen Magazinen aufnehmen und so gemischte Stapel zusammenstellen, die dann als Teilelemente komplett auf eine Zielpalette verladen oder in einer zweiten Stapelstufe ihrerseits mit anderen Teilstapeln zusammengeführt oder kombiniert werden können.

Während die Magazinierung vorzugsweise sortenrein erfolgt, um Magazine mit Gebinden derselben Sorte bzw. Art zu befüllen, kann die Entmagazinierung bevorzugt gemischt erfolgen, um gemischte Stapel vorzubereiten und zur Palettierung auf die Zielpalette bereitszustellen.

Gemäß einem dritten Aspekt der vorliegenden Erfindung, der bevorzugt mit dem vorstehend erläuterten ersten und/oder zweiten Aspekt kombiniert ist, wird eine Zielpalette mit vereinzelten Gebinden wahlweise auch mit wenigstens einer unvereinzelten Gebindelage palettiert. Insbesondere können zunächst eine oder mehrere Lagen einer Quellpalette von dieser abgehoben werden, wobei diese Lage(n) dann wahlweise weiter vereinzelt oder komplett auf eine Zielpalette palettiert werden, i.e. eine Lagenkommissionierung eine Einzelgebindekommissionierung speist.

Im Gegensatz zum eingangs geschilderten Stand der Technik, in der Quellpaletten stets vollständig vereinzelt werden, erlaubt die wahlweise Palettierung einer oder mehrerer unvereinzelter Gebindelage es, Zielpaletten, die Gebindelagen aufweisen, die Gebindelagen einer Quellpalette entsprechen, insbesondere sogenannte Regenbogenpaletten, rascher zu palettieren. Dabei kann die Zielpalette ausschließlich unvereinzelte Quellpalettenlagen, insbesondere sortenreine Lagen, aufweisen. Gleichermaßen können solche Lagen auch als Start-, Zwischen- und/oder Endlagen mit anderen Zielgebindelagen kombiniert werden, die aus verschiedenen Quellpaletten vereinzelte Gebinde enthalten.

In einer bevorzugten Ausführung der vorliegenden Erfindung nach wenigstens einem der vorstehend erläuterten drei Aspekte werden unterschiedliche Quellpaletten horizontal neben- und/oder hintereinander in einem Lagenkommissionierungsmodul bereitgestellt, was insbesondere einen wahlweisen Zugriff auf eine Mehrzahl von Quellpaletten erleichtern kann.

Die Bereitstellung kann insbesondere mittels Flurfördertechnik, beispielsweise mittels Ein- oder Mehrfachverteil- bzw. Verschiebewägen erfolgen, auf denen eine bzw. mehrere Quellpaletten, zum Beispiel mittels Teleskopgabeln, zu vorgegebenen Palettenstellplätzen befördert werden. Insbesondere, um den Raum für die Fahrwege solcher Verschiebewägen einzusparen, kann die Bereitstellung zusätzlich oder alternativ mittels Portalfördertechnik, beispielsweise durch einen über den Quellpaletten verfahrbaren Palettenheber, der die Paletten vorzugsweise wenigstens teilweise um- und/oder untergreift, erfolgen. In gleicher Weise, zum Beispiel mittels Verschiebewägen oder Palettenhebern, können zusätzlich oder alternativ auch Zielpaletten bewegt werden.

Zusätzlich oder alternativ können Quellpaletten auch wechselnd bereitgestellt werden. Insbesondere können Quellpaletten in dem Lagenkommissionierungsmodul je nach Bedarf, vorzugsweise entsprechend einer Vorausplanung, bereitgestellt werden, wenn eine oder mehrere Gebindelagen vereinzelt und magaziniert werden sollen, um entsprechende Magazine aufzufüllen und/oder unvereinzelt auf Zielpaletten palettiert werden. Bei Nichtbedarf können Quellpaletten wieder aus dem Lagenkommissionierungsmodul entfernt und beispielsweise in ein Hochregal-, Block-oder Pufferlager transportiert werden, bis sie erneut bereitgestellt werden. Vorzugsweise wird für jede zu kommissionierende Gebindesorte parallel wenigstens eine entsprechende Quellpalette bereitgestellt, um bei Bedarf das entsprechende Magazin zu bedienen oder unvereinzelte Lagen zur Verfügung zu stellen. Gleichermaßen ist eine bedarfsorientierte Bereitstellung beispielsweise derart möglich, dass Quellpaletten, auf die in der Vergangenheit oder im Mittel häufiger zugegriffen wird, sogenannte A- und/oder B-Quellpaletten, ständig oder vorrangig bereitgestellt werden, während Quellpaletten, auf die voraussichtlich seltener zugegriffen wird, sogenannte C- und/oder D-Quellpaletten, nur temporär oder nachrangig bereitgestellt werden.

In einer bevorzugten Ausführung werden Gebinde, Gebindestapel, Gebindelagen und/oder Leerpaletten mittels Portalfördertechnik, insbesondere Greifern gehandhabt, die auf über den Paletten verfahrbaren Portalen gelagert sind. Dabei können Greifer zur Handhabung von Gebinden, Gebindestapeln, Gebindelagen und/oder Leerpaletten mit dem Portal oder einer umgebungsfesten Basis über einen ein- oder mehrgelenkigen Manipulator, insbesondere einen mehr-, insbesondere sechsachsigen Roboter, verbunden sein, um die Handhabung zu verbessern.

Beispielsweise können Gebinde oder Gebindestapel mittels Säulengreifern gegriffen werden, die vorzugsweise zwei oder mehr aufeinander gestapelte Gebinde zusammen fixieren können. Lagengreifer, zum Beispiel Aufroll- oder Sauggreifer, können eine oder mehrere komplette Gebindelagen von Quellpaletten aufnehmen und auf Zielpaletten oder Vereinzelungseinrichtungen absetzen. In einer bevorzugten Ausführung kann ein Lagengreifer, beispielsweise mittels elektrisch betätigbarer Haken, auch einen Träger bzw. eine Transportpalette, vorzugsweise zusammen mit einer oder mehreren Gebindelagen, handhaben. So kann ein solcher Greifer den Träger einer Quellpalette aufnehmen und auf einem Abstellplatz für leere Träger oder auf dort bereits abgestellte leere Träger absetzen und, sofern er zugleich eine oder mehrere Gebindelagen gegriffen hat, diese anschließend an ihren Zielort bringen, um so Verfahrzeit und -weg zu reduzieren.

Gleichermaßen können Gebinde oder Gebindestapel auch mittels Flurfördertechnik gehandhabt werden, insbesondere mit Stück- und/oder Stetigförderen. Diese können beispielsweise Gebinde(teil)lagen (weiter) aufziehen, stapeln oder, vorzugsweise gestapelt, transportieren. Zusätzlich zum Aufziehen durch Geschwindigkeits- und/oder Richtungsänderungen von Förderern, kommunizierenden Stetigförderern mit unterschiedlichen Geschwindigkeiten oder über Eck orientiert, und schaltbaren Weichen in solchen Förderern kann eine Vereinzelungseinrichtung auch Stelleinrichtungen, beispielsweise Greifer oder Schieber, zur Verschiebung und/oder Umorientierung von Gebinden auf solchen Förderern aufweisen.

In einer bevorzugten Ausführung ist die Kapazität einer Magazinierungseinrichtung zur gestapelten Magazinierung von Gebinden variabel vorgebbar, um sie wechselndem Bedarf anzupassen und insbesondere eine automatisierte Nachfüllung und eine entsprechende Bereitstellung von Quellpaletten zu steuern.

Ein erfindungsgemäßes Verfahren zur automatisierten Kommissionierung von Gebinden kann somit insbesondere die Schritte umfassen: Bereitstellen von unterschiedlichen Quellpaletten und Palettieren wenigstens einer Zielpalette, wobei Gebindelagen von unterschiedlichen Quellpaletten wechselnd und/oder variabel vorgegeben vereinzelt und magaziniert und/oder Gebinde oder Gebindegruppen vor dem Palettieren einer Zielpalette gestapelt magaziniert und/oder entmagaziniert werden und/oder eine Zielpaletten wahlweise mit wenigstens einer unvereinzelten Gebindelage einer Quellpalette palettiert wird.

Weitere Vorteile und Merkmale ergeben sich aus den Unteransprüchen und den Ausführungsbeispielen. Hierzu zeigt, teilweise schematisiert:
- Fig. 1:: eine Vorrichtung zur automatisierten Kommissionierung von Gebinden bei der Durchführung eines Verfahrens nach einer Ausführung der vorliegenden Erfindung in der Draufsicht; und
- Fig. 2A bis 2D:: Seitansichten gemäß der Sichtlinien IIA-IIA bis IID-IID in Fig. 1.

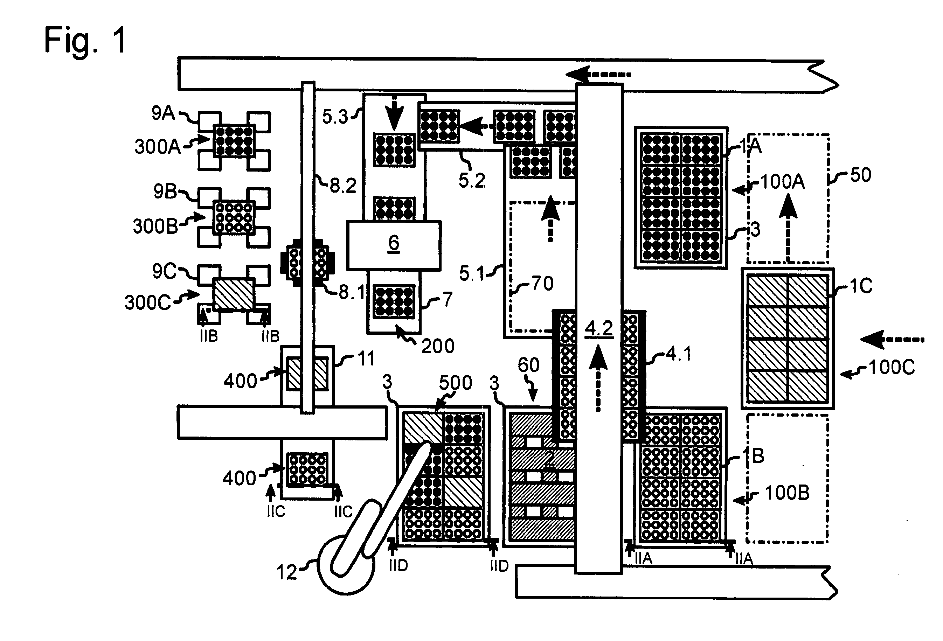

Fig. 1 zeigt eine Vorrichtung zur automatisierten Kommissionierung von Gebinden bei der Durchführung eines Verfahrens nach einer Ausführung der vorliegenden Erfindung von oben.

Von einem Hochregal- oder Blocklager werden direkt oder, um die Verfügbarkeit zu erhöhen, über ein Pufferlager (nicht dargestellt) sortenreine Vollpaletten 100A, 100B bzw. 100 C als Quellpaletten zu einem Lagenkommissionierungsmodul (rechts in Fig. 1) angeliefert. Die Verteilung auf in Fig. 1 strichpunktiert angedeutete Quellpalettenstellplätze 50 in dem Lagenkommissionierungsmodul erfolgt, wie in Fig. 1 durch fette strichlierte Pfeile angedeutet, mittels Verschiebewägen 3, auf denen die Quellpaletten 100A,...,100C abgestellt sind und die mittels Teleskopgabein auf Verfahrwegen zu den Stellplätzen bewegt werden (nicht dargestellt).

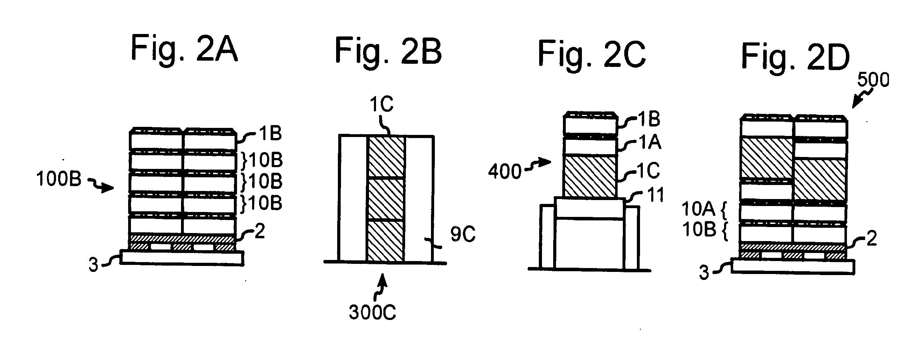

Eine sortenreine Quellpalette 100B weist, wie insbesondere in Zusammenschau mit der Seitansicht der Fig. 2 gemäß Sichtlinie IIA-IIA in Fig. 1 erkennbar, mehrere vertikal übereinander angeordnete Gebindelagen 10B auf, die jeweils mehrere Gebinde 1B derselben Sorte aufweisen und auf einem Träger 2 angeordnet sind, der seinerseits auf einem Verschiebewagen 3 steht. Man erkennt in den Figuren durch leere bzw. ausgefüllte Zylinder bzw. Schraffur angedeutete unterschiedliche Gebindesorten 1A, 1B bzw. 1C, die sich auch in ihrer Größe, insbesondere ihrer Stellfläche und/oder Höhe, unterscheiden können.

Für jede Sorte wird im Betrieb je wenigstens eine Quellpalette auf einem fest zugewiesenen oder, insbesondere leistungsoptimiert, wählbaren Stellplatz bereitgestellt. Gleichermaßen ist es möglich, nur häufiger kommissionierte Sorten ständig bereitzustellen und/oder Quellpaletten nach Entnahme wenigstens einer Gebindelage wieder aus dem Lagenkommissionierungsmodul zu entfernen und bei Bedarf erneut bereitzustellen.

Zusätzlich sind in dem Lagenkommissionierungsmodul ein Stapelplatz für leere Träger 3 (nicht dargestellt) sowie Stellplätze 60 für Zielpaletten und eine Übergabestation 70 einer Vereinzelungseinrichtung 6 vorgesehen.

Über dem Lagenkommissionierungsmodul ist ein Flächenportal mit wenigstens einer verfahrbaren Brücke 4.2 angeordnet, an der ein verfahrbarer Lagegreifer 4.1 befestigt ist, der beispielsweise als Aufroll- oder Sauggreifer ausgebildet sein kann. Die horizontalen Verfahrwege dieses Portal-Stück-Förderers 4 zur Handhabung von Gebindelagen sind in Fig. 1 wiederum durch fette strichlierte Pfeile angedeutet. Bevorzugt sind mehrere Greifer mit einander überlappenden Aktionsbereichen vorgesehen (nicht dargestellt).

Sollen wahlweise eine oder mehrere unvereinzelte, sortenreine Gebindelagen auf eine Zielpalette palettiert werden, beispielsweise um eine Regenbogenpaletten zu palettieren oder als Starterpalette anschließend mit gemischten Gebinden aufzufüllen, holt ein Verschiebewagen 3 eine Leerpalette 2 von einem Leerpalettenmagazin (nicht dargestellt) und stellt sie auf der Stellplatzposition 60 ab. Der Lagegreifer 4.1 verfährt zur Position einer Quellpalette der gewählten Gebindesorte, nimmt eine oder mehrere Gebindelagen auf, verfährt zur Zielposition 60 und setzt die Lage(n) dort ab.

Wird vom Lagengreifer 4.1 eine unterste Gebindelage einer Quellpalette aufgenommen, wird unterhalb einer Beladeplatte mittels elektrisch betätigter Haken (nicht dargestellt) auch der Träger 3 aufgenommen. Der Greifer 4.1 verfährt anschließend zur Position "Stapel leerer Quellpalettenträger" und setzt den Träger dort. Die Gebindelage verbleibt im Greifer, wird zur Zielposition 60 verfahren und dort abgesetzt. Dies reduziert Verfahrweg und -zeit des Greifers 4.1.

Diese Vorgänge werden wiederholt, bis die gewünschten sortenreinen Gebindelagen auf der Zielpalette aufgebaut sind. Anschließend kann diese zu einem Wickler zur Verpackung der komplettierten Regenbogenpalette gebracht werden (nicht dargestellt). Gleichermaßen kann sie als Starterpalette in eine Roboterzelle (in Fig. 1 links neben der Position 60) gebracht und ihr einzelne Gebinde zukommissioniert werden, wie nachfolgend näher erläutert. Fig. 2D zeigt exemplarisch eine gemischte Zielpalette 500, deren zwei unterste Lagen sortenrein durch lageweise Paletttierung mit Gebindelagen der Quellpaletten 100B bzw. 100A palettiert wurden. Natürlich kann umgekehrt auch eine Palette, die in der Roboterzelle bereits teilweise mit gemischten Lagen palettiert wurde, ihrerseits in Zielposition 60 transportiert werden, um sortenreine Zwischen- oder Decklagen effizient aufzupalletieren.

Insbesondere bei großer Sortenvielfalt können in einer nicht dargestellten Abwandlung ein oder mehrere Palettenheber zusätzlich oder anstelle der Verschiebewägen 3 eingesetzt werden, um die Quellpaletten an ihre Positionen im Lagenkommissionierungsmodul zu bewegen. Diese können, wie vorstehend mit Bezug auf den Lagengreifer 4.1 beschrieben, an verfahrbaren Brücken an demselben oder einem anderen Flächenportal befestigt sein und komplette Paletten inklusiver ihrer Träger 2 greifen, anheben, transportieren und absetzen. Damit können insbesondere Verfahrwege für Verschiebewägen entfallen, so dass die Nutzfläche des Lagenkommissionierungsmoduls vergrößert und dessen Beschickung und Entsorgung flexibler und rascher durchgeführt werden kann.

Wahlweise zu der Palettieren einer unvereinzelten Gebindelage auf eine Zielpalette kann diese auch vereinzelt und magaziniert werden. Hierzu setzt der Lagengreifer 4.1 die Gebindelage auf der Übergabeposition 70 ab. Somit erfolgt erfindungsgemäß stets zunächst eine Lagekommissionierung, die wahlweise eine Einzelkommissionierung speist. Dabei werden je nach Bedarf, beispielsweise je nach Füllgrad bzw. Nachfüllbedarf nachfolgend näher erläuterter Magazin 9A bis 9C, wechselnd und prozessoptimiert Gebindelagen von unterschiedlichen Quellpaletten 100A,...100C vereinzelt und magaziniert. Auf diese Weise verbleiben Gebindelagen in den Quellpaletten, bis sie benötigt werden, so dass eine Vereinzelungseinrichtung 5 bedarfsgerecht abwechselnd für mehrere Gebindesorten genutzt wird.

Der Lagegreifer 4.1 setzt die Gebindelage auf der Übergabeposition 70 ab, wobei gegebenenfalls über einen Zwischenlagenabheber Zwischenlagen entfernt und beispielsweise in einer Gitterbox abgelegt werden (nicht dargestellt). Bereits beim Absetzen vereinzelt der Lagegreifer die Gebindelage in einer Horizontalrichtung.

Die Vereinzelungseinrichtung 5 umfasst drei über Eck orientiert, miteinander kommunizierende Mattenkettenförderer 5.1, 5.2 und 5.3 zum weiteren Aufziehen von Gebindelagen der Übergabeposition 70 in einzelne Gebinde 1A.

Die Gebinde liegen auf dem Stetigförderer 5.3 einzeln vor. Zur Leistungserhöhung ist für niedrige Gebinde eine Stapelstation 6 vorgesehen, in der wahlweise mehrere Gebinde, vorzugsweise sortenrein, aufeinander gestapelt und einem Förderer 7 übergeben werden, der sie in einen Aufnahmebereich 200 eines Portalförderers 8 zur Magazinierung transportiert.

Der Portalförderer 8 umfasst einen Säulengreifer 8.1 zur Aufnahme einer oder mehrerer gestapelter Gebinde, der auf einem verfahrbaren Portal 8.2 verfahrbar gelagert ist. Dieser nimmt die Gebinde bzw. Gebindestapel im Aufnahmebereich 200 auf, wobei der Säulengreifer 8.1 durch ein- oder mehrfaches Umsetzen auf nachfolgend durch den Förderer 7 in den Aufnahmebereich 200 geförderte Gebinde(stapel) aufgefüllt und anschließend gestapelt zu entsprechenden Magazinen 9A,...9C bewegt wird, die manuell auf jeweilige Gebindegrößen eingestellt wurden. In diesen werden die Gebinde zu Gebindestapeln 300A, 300b bzw. 300 C gestapelt magaziniert, wie Fig. 2B exemplarisch zeigt.

Zur gemischten Palettierung fährt umgekehrt der Greifer 8.1 oder ein entsprechender Greifer, der kollissionsfrei mit dem Greifer 8.1 gesteuert wird, in vorgegebenen Palettiersequenzen die Magazine 9A, 9B bzw. 9C an, um sukzessive Gebinde oder Gebindestapel aufzunehmen. Der Greifer kann somit durch sukzessives Anfahren unterschiedlicher magazinierter Gebindestapel 300A,...300C in einer ersten Stufe gemischte Gebindestapel erstellen, indem er dabei die jeweils bereits gegriffenen anderssortigen Gebinde in das angefahrene Magazin stellt und dem bereits eingesammelten gemischten Gebindestapel durch Tiefergreifen eine oder mehrere Gebindelagen aus dem angefahrenen Magazin hinzufügt, einen gemischten Gebindestapel also von oben nach unten aus den Magazinen "einsammelt". Vorteilhafterweise weisen die derart gemischten Gebinde einander entsprechende Greifflächen, insbesondere Grundflächen, auf. Der Greifer setzt die eingesammelten Gebindestapel auf einem weiteren Förderer 11 ab.

Zusätzlich in einer weiteren Stufe oder alternativ können Gebindestapel vor dem gemischten Palettien auf eine Zielpalette auch dadurch vorab gemischt zusammengestellt werden, dass ein oder mehrere Greifer 8.1 sortenreine Gebinde oder Gebindestapel aus verschiedenen Magazinen und/oder vorab gemischt eingesammelte Gebindestapel sukzessive übereinander auf dem Förderer 11 absetzen und so vorgemischte Gebindestapel 400 erzeugen, die vom Förderer 11 dann in eine Roboterzelle mit einem Roboter 12 bewegt werden, der diese aufnimmt und entsprechend dem Packmuster auf eine gemischte Zielpalette 500 palettiert.

Fig. 2C zeigte exemplarisch einen solchen vorgemischten Gebindestapel 400 auf dem Förderer 11, der erzeugt wurde, indem der Säulengreifer 8.1 zunächst ein Gebinde 1C aus dem Magazin 9C aufgenommen und auf dem Förderer abgesetzt hat. Die Kapazität des Greifers 8.1 beträgt im Ausführungsbeispiel zur Veranschaulichung zwei Einheitshöhen, wobei Gebinde 1A, 1B eine Einheitshöhe, Gebinde 1C zwei Einheitshöhen aufweisen, so dass der Greifer 8.1 wahlweise maximal ein Gebinde 1C oder zwei gestapelte Gebinde 1A/B aufnehmen kann. Daher fährt der Greifer 8.1 nach Absetzen des Gebindes 1C auf dem Förderer 11 zunächst den Gebindestapel 300B an, nimmt dort ein Gebinde 1C auf und sammelt anschließend vom Gebindestapel 300A ein Gebinde 1A von unten hinzu, bevor er diesen Zweierstapel 1A-1B auf dem Gebinde 1C auf dem Förderer absetzt, so dass der Roboter 12 diesen gemischten Dreierstapel 1C-1A-1B gemeinsam greifen und auf die Zielpalette 500 palettieren kann.

Fig. 2D zeigt diese von der Seite. Man erkennt, das auf dem durch einen Verschiebewagen 3 in die Roboterzelle angelieferten Träger 2 zunächst in der oben erläuterten Weise zwei sortenreine Gebindelagen abgesetzt wurden, indem der Lagengreifer 4.1 diese von den Quellpaletten 100A bzw. 100B abgehoben und komplett auf den Träger 2 bzw. die Decklage abgesetzt hat, bevor die Regenbogenpalette als Starterpalette in die Roboterzelle transportiert und dort horizontal gemischte Stapeln wie beispielsweise dem Stapel 400 hinzupalettiert werden.

Im Ausführungsbeispiel ist zur Verdeutlichung die Gebinde-, Paletten- und Greiferzahl stark reduziert, in realen Anlagen können beispielsweise über 100, vorzugsweise über 250 Palettenstellplätze, jeweils ein oder mehrere Portalbrücken für Paletten- und für Lagengreifer, über 100, vorzugsweise über 250 Magazine und/oder mehrere, beispielsweise 5 oder mehr Roboterzellen zum Palletieren vorgesehen sein.

### Bezugszeichenliste

- 1A, 1B, 1C: Gebinde einer Sorte
- 2: Träger/Leerpalette
- 3: Verschiebewagen
- 4.1: Lagengreifer
- 4.2: Portal
- 5.1, 5.2, 5.3: Förderer
- 6: Stapelstation
- 7: Förderer
- 8.1: Säulengreifer
- 8.2: Portal
- 9A, 9B, 9C: Magazin
- 11: Förderer
- 12: Palettierroboter
- 50: Quellpalettenstellplatz
- 60: Zielpalettenstellplatz
- 70: Übergabestation
- 100A, 100B, 100C: sortenreine Quellpalette
- 200: sortenreiner Gebindestapel

## Patentansprüche

1. Verfahren zur automatisierten Kommissionierung von Gebinden (1A, 1 B, 1C), mit den Schritten:
Bereitstellen von unterschiedlichen Quellpaletten (100A, 100B, 100C); und
Palettieren wenigstens einer Zielpalette (500);
**gekennzeichnet durch**
eine wechselnde und/oder variabel vorgegebene Vereinzelung und Magazinierung von Gebindelagen (10A, 10B, 10C) von unterschiedlichen Quellpaletten; und/oder eine gestapelte Magazinierung (300A, 300B, 300C) und/oder Entmagazinierung von Gebinden oder Gebindegruppen vor dem Palettieren einer Zielpalette (500).

2. Verfahren nach Anspruch 1, **dadurch gekennzeichnet, dass** sortenreine Quellpaletten (100A, 100B, 100C) bereitgestellt werden und/oder eine gemischte Zielpalette (500), insbesondere mit einer oder mehreren sortenreinen Lagen (10A, 10B), palettiert wird.

3. Verfahren nach einem der vorhergehenden Ansprüche, **dadurch gekennzeichnet, dass** Quellpaletten horizontal neben- und/oder hintereinander und/oder wechselnd bereitgestellt werden.

4. Verfahren nach einem der vorhergehenden Ansprüche, **dadurch gekennzeichnet, dass** Quellpaletten, Zielpaletten, Gebinde, Gebindestapel, Gebindelagen und/oder Leerpaletten mittels Flur- und/oder Portalfördertechnik (2, 4, 5, 7, 8, 11) gehandhabt werden.

5. Verfahren nach einem der vorhergehenden Ansprüche, **dadurch gekennzeichnet, dass** Gebinde oder Gebindegruppen vor ihrer Magazinierung und/oder dem Palettieren einer Zielpaletten, insbesondere bei ihrer Entmagazinierung, sortenrein und/oder gemischt, insbesondere mehrstufig gestapelt (200, 400) werden.

6. Verfahren nach einem des vorhergehenden Ansprüche, **gekennzeichnet durch** ein wahlweises Palettieren einer Zielpaletten mit wenigstens einer unvereinzelten Gebindelage (10A, 10B) einer Quellpalette.

7. Vorrichtung zur automatisierten Kommissionierung von Gebinden gemäß einem Verfahren nach einem der vorhergehenden Ansprüche, mit einem Lagenkommissionierungsmodul zum Bereitstellen von unterschiedlichen Quellpaletten (100A, 100B, 100C); **gekennzeichnet durch**:
eine Vereinzelungseinrichtung (4.1, 5) zur wechselnden Vereinzelung von Gebindelagen (10A, 10B, 10C) von unterschiedlichen Quellpaletten;
eine Magazinierungseinrichtung (9A, 9B, 9C) zur gestapelten Magazinierung von Gebinden.

8. Vorrichtung nach Anspruch 7, **gekennzeichnet durch** wenigstens einen Manipulator, insbesondere Roboter (12), zur Handhabung von Gebinden (1A, 1 B, 1 C), Gebindelagen, Gebindestapeln (400) und/oder Paletten.

9. Vorrichtung nach einem der vorhergehenden Ansprüche 7 bis 8, **gekennzeichnet durch** wenigstens einen Flur- und/oder Portal-Stück- und/oder Stetigförderer (2, 4, 5, 7, 8, 11) zur Handhabung von Gebinden, Gebindelagen, Gebindestapeln und/oder Paletten.

10. Vorrichtung nach einem der vorhergehenden Ansprüche 7 bis 9, **gekennzeichnet durch** wenigstens eine Stapelstation (6) und/oder einen Säulengreifer (8.1) zur Magazinierung und/oder Entmagazinierung von Gebinden oder Gebindegruppen.

11. Vorrichtung nach einem der vorhergehenden Ansprüche 7 bis 10, **gekennzeichnet durch** eine Steuereinrichtung, die zur Durchführung eines Verfahrens nach einem der vorhergehenden Ansprüche 1 bis 5 eingerichtet ist.

12. Vorrichtung nach einem des vorhergehenden Ansprüche 7-11, **gekennzeichnet durch gekennzeichnet durch** eine Palettiereinrichtung (4.1, 60) zum wahlweisen Palettieren wenigstens einer Zielpalette (500) mit wenigstens einer unvereinzelten Gebindelage (10A, 10B).

## Claims

1. A method for automated commissioning of bundles (1A, 1B, 1C) with the steps:
providing different source palettes (100A, 100B, 100C); and
palletizing at least one target palette (500);
**characterized by**
alternatingly and/or variably predeterminedly individualizing and magazining of bundle layers (10A, 10B, 10C) of different source palettes; and/or stacked magazining (300A, 300B, 300C) and/or de-magazining of bundles or groups of bundles before palletizing a target palette (500).

2. A method according to claim 1, **characterized in that** homogeneous source palettes (100A, 100B, 100C) are provided and/or a mixed target palette (500), in particular with one or more homogeneous layers (10 A, 10B), is palletized.

3. A method according to one of the preceding claims, **characterized in that** source palettes are provided horizontally next to each other and/or successively and/or alternating.

4. A method according to one of the preceding claims, **characterized in that** source palettes, target palettes, bundles, bundle stacks, bundle layers and/or void palettes are handled by floor techniques and/or portal conveyor techniques (2, 4, 5, 7, 8, 11).

5. A method according to one of the preceding claims, **characterized in that** bundles or groups of bundles are stacked homogeneously and/or mixed, in particular in a multi-staged way (200, 400), before the magazining and/or the palletizing of a target palette, in particular when they are de-magazined.

6. A method according to one of the preceding claims, **characterized by** selectively palletizing a target palette with at least one non-individualized bundle layer (10A, 10B) of a source palette.

7. An apparatus for automated commissioning of bundles with respect to a method according to one of the preceding claims, with a layer commissioning module for providing different source palettes (100A, 100B, 100C); **characterized by**:
an individualization means (4.1, 5) for alternating individualization of bundle layers (10A, 10B, 10C) of different source palettes;
a magazining means (9A, 9B, 9C) for stacked magazining of bundles.

8. An apparatus according to claim 7, **characterized by** at least one manipulator, in particular a robot (12), for handling bundles (1A, 1B, 1C), bundle layers, bundle stacks (400) and/or palettes.

9. An apparatus according to one of the preceding claims 7 to 8, **characterized by** at least one floor-and/or portal- unit conveyor and/or continuous conveyor (2, 4, 5, 7, 8, 11) for handling of bundles, bundle layers, bundle stacks and/or palettes.

10. An apparatus according to one of the preceding claims 7 to 9, **characterized by** at least one stacking station (6) and/or a column gripper (8.1) for magazining and/or de-magazining of bundles or groups of bundles.

11. An apparatus according to one of the preceding claims 7 to 10, **characterized by** a control means that is arranged to realize a method according to one of the preceding claims 1 to 5.

12. An apparatus according to one of the preceding claims 7 to 11, **characterized by** a palletizing means (4.1, 60) for selectively palletizing of at least one target palette (500) with at least one non-individualized bundle layer (10A, 10B).

## Revendications

1. Procédé de préparation de commandes automatisée d'emballages (1A, 1B, 1C), comprenant les étapes consistant :
à fournir différentes palettes sources (100A, 100B, 100C) ; et
à palettiser au moins une palette cible (500) ;
**caractérisé par**
une individualisation variable et/ou prédéfinie de façon variable et une mise en réserve de couches d'emballages (10A, 10B, 10C) de différentes palettes sources ; et/ou une mise en réserve empilée (300A, 300b, 300C) et/ou une sortie de la réserve d'emballages ou de groupes d'emballages avant leur palettisation sur une palette cible (500).

2. Procédé selon la revendication 1, **caractérisé en ce que** des palettes sources (100A, 100B, 100C) ne contenant qu'un type de produit sont fournies et/ou une palette cible mélangée (500), comprenant en particulier une ou plusieurs couches (10A, 10B) ne contenant qu'un type de produit, est palettisée.

3. Procédé selon l'une quelconque des revendications précédentes, **caractérisé en ce que** les palettes sources sont fournies horizontalement les unes à côté des autres et/ou les unes derrière les autres et/ou alternées.

4. Procédé selon l'une quelconque des revendications précédentes, **caractérisé en ce que** les palettes sources, les palettes cibles, les emballages, les piles d'emballages, les couches d'emballages et/ou les palettes vides sont manipulés au moyen d'une technique de manutention au sol et/ou à portique (2, 4, 5, 7, 8, 11).

5. Procédé selon l'une quelconque des revendications précédentes, **caractérisé en ce que** les emballages ou les groupes d'emballages ne contiennent qu'un type de produit et/ou sont mélangés, en particulier empilés sur plusieurs étages (200, 400), avant d'être mis en réserve et/ou d'être palettisés sur une palette cible.

6. Procédé selon l'une quelconque des revendications précédentes, **caractérisé par** une palettisation sélective d'une palette cible comprenant au moins une couche d'emballages (10A, 10B) non individualisée d'une palette source.

7. Dispositif de préparation de commandes automatisée d'emballages selon un procédé selon l'une quelconque des revendications précédentes, comprenant un module de préparation de commandes de couches destiné à fournir différentes palettes sources (100A, 100B, 100C), **caractérisé par** : un dispositif d'individualisation (4.1, 5) destiné à l'individualisation en alternance de couches d'emballages (10A, 10B, 10C) de différentes palettes sources ;
un dispositif de mise en réserve (9A, 9B, 9C) destiné à la mise en réserve empilée d'emballages.

8. Dispositif selon la revendication 7, **caractérisé par** au moins un manipulateur, en particulier un robot (12), destiné à manipuler des emballages (1A, 1B, 1C), des couches d'emballages, des piles d'emballages (400) et/ou des palettes.

9. Dispositif selon l'une quelconque des revendications précédentes 7 à 8, **caractérisé par** au moins un convoyeur à portique et/ou discontinu à portique et/ou continu (2, 4, 5, 7, 8, 11) destiné à manipuler des emballages, des couches d'emballages, des piles d'emballages et/ou des palettes.

10. Dispositif selon l'une quelconque des revendications 7 à 9, **caractérisé par** au moins une station d'empilement (6) et/ou une pince à colonne (8.1) destinées à mettre en réserve et/ou à sortir de la réserve des emballages ou des groupes d'emballages.

11. Dispositif selon l'une quelconque des revendications 7 à 10, **caractérisé par** un dispositif de commande conçu pour mettre en oeuvre un procédé selon l'une quelconque des revendications précédentes 1 à 5.

12. Dispositif selon l'une quelconque des revendications 7 à 11, **caractérisé par** un dispositif de palettisation (4.1-60) destiné à la palettisation sélective d'au moins une palette cible (500) comprenant au moins une couche d'emballages (10A, 10B) non individualisés.
